Europäisches Patentamt

European Patent Office

Office européen des brevets

(11) Publication number: **0 291 864 B1**

# EUROPEAN PATENT SPECIFICATION

(45) Date of publication of patent specification: **15.07.92**   (51) Int. Cl.⁵: **B25J 17/02**, B25J 9/10, F16C 23/00

(21) Application number: **88107674.9**

(22) Date of filing: **13.05.88**

---

(54) **Device for an articulated connection of two parts of a robot arm.**

---

(30) Priority: **20.05.87 SE 8702082**

(43) Date of publication of application:
**23.11.88 Bulletin 88/47**

(45) Publication of the grant of the patent:
**15.07.92 Bulletin 92/29**

(84) Designated Contracting States:
**DE FR GB IT**

(56) References cited:
**EP-A- 0 164 112**      **FR-A- 956 379**
**FR-A- 2 560 546**      **US-A- 2 355 723**
**US-A- 3 903 754**      **US-A- 4 518 308**

(73) Proprietor: **ASEA BROWN BOVERI AB**

**S-721 83 Västeras(SE)**

(72) Inventor: **Forslund, Karl-Erik**
**Vardkasevägen 4**
**S-723 53 Västeras(SE)**
Inventor: **Klangeby, Klas**
**Ragnaröksgatan 22**
**S-723 55 Västeras(SE)**

(74) Representative: **Boecker, Joachim, Dr.-Ing.**
**Rathenauplatz 2-8**
**W-6000 Frankfurt a.M. 1(DE)**

## Description

The invention relates to a device for articulately connecting two parts of a robot arm according to the precharacterising part of Claim 1. Such a device is known from the FR-A-2 560 546.

An industrial robot normally comprises an arm which is movable in several degrees of freedom, the free end of the arm supporting a hand in the form of a gripper or the like. The arm often consists of a first arm part and a second arm part interconnected by an elbow joint.

In industrial robots it is a requirement that the robot arm can repeat, with great accuracy, programmed patterns of movement. If changes - even small ones - in the programmed final position of the hand occur as a result of replacement or repair of parts in, for example, the arm, this may require reprogramming, which is very time-consuming in the case of complicated patterns of movement of the robot arm.

The FR-A-2 560 546 discloses a device according to the introductory part of claim 1. Between the two lug members of the first arm part an axle is rotatable journalled by means of bearings. The end portion of the second arm part is fixedly connected to the mid-portion of said axle so that it can rotate along with said axle relative to the first arm part. No means for lateral adjustment of the axle are provided.

The invention aims at developing a device for articulately connecting two parts of a robot arm of the above-mentioned kind, the design of which enables one arm part, for example after replacement, to be adjusted with satisfactory tolerance relative to the other arm part and thus to the same position as earlier to avoid, in the case of a programmed robot, reprogramming.

To achieve this aim the invention suggests a device for articulately connecting two arm parts, which is characterized by the features of the characterizing part of Claim 1.

Further developments of the invention are characterized by the features of the additional claims.

By loosening one nut and tightening the other, the connected shaft sleeves in the lug holes of the yoke are displaced in one or the other direction resulting in lateral displacement of the associated arm part with respect to the other arm part. In this way, a lateral adjusting of up to about, for example, two millimetres can be achieved, which is sufficient to avoid reprogramming after replacement of, for example, an arm part of a robot.

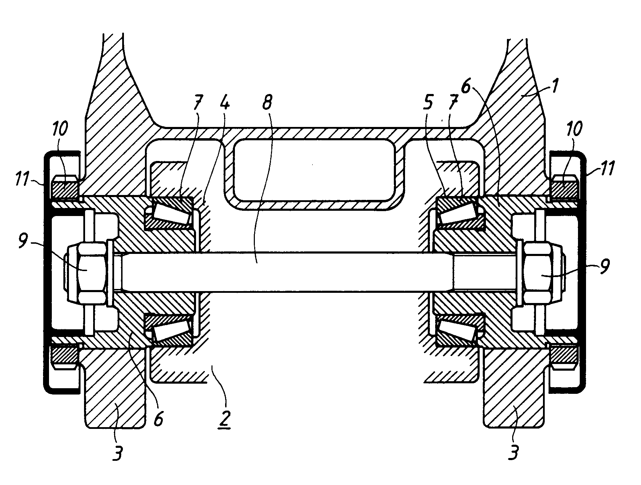

The invention will be most readily understood with reference to the accompanying drawing, the single figure of which shows an elbow joint in the arm of an industrial robot.

In the figure, 1 designates a first arm part and 2 a second arm part, only the most interesting parts of the robot arm, nearest to the actual joint, being shown. The connection end of the first arm is formed as a yoke with two spaced apart parallel lugs 3 between which the end 4 of the second arm part 2 is fitted. The end 4 is provided with bearing seats 5 in which shaft sleeves 6 are journalled by means of conical bearings 7. A pull rod 8 is passed through the end 4 and the shaft sleeves 6. By means of nuts 9, which are screwed on the pull rod 8, the shaft sleeves 6 can be pressed against the bearing seats 5 and the play between the sleeves 6 and the seats 5 can be adjusted. The nuts 9 are provided with suitable locking washers. The lugs 3 of the first arm part 1 are provided with through-holes for the shaft sleeves 6 which project from the outer side of the respective lug. This projecting part of the shaft sleeves 6 is threaded and provided with nuts 10. By tightening a nut 10 on one side and loosening the corresponding nut 10 on the other side of the elbow joint, the arm part 2 can be laterally moved in relation to the arm part 1, whereby the maximally required lateral movement can be estimated, for example, at approximately two millimetres.

The device is very practical since it permits simple assembly and dismantling of the joint. To replace an arm part, for example, the cover 11 is first removed. Thereafter, the nuts 9 and 10 ar screwed off. The shaft sleeves 6, which do not rotate but are fitted in respective holes in the lugs 3 by wringing fit, can be removed by means of a withdrawing tool with threads adapted to internal threads in the through-holes of the shaft sleeves 6. Thereafter, the arm parts 1 and 2 can be separated.

Assembly is performed in the opposite sequence. The arm part 2 is fitted in between the lugs 3. The shaft sleeves 6 are inserted through the holes in the lugs 3 and are tightened by means of the nuts 9, while at the same time ensuring that a suitable play is obtained in the elbow joint by measured tightening of the nuts 9 and applying the above-mentioned locking washers or other suitable locking means on the nuts 9. Thereafter, the nuts 10 are screwed on and the arm part 2 is adjusted in relation to the arm part 1. Finally, the covers 11 are fitted on.

## Claims

1. Device for articulately connecting two arm parts, preferably of a robot arm, comprising a first arm part (1), the connection end of which is formed as a yoke with two spaced apart lugs or flanges (3) at the location of the joint, and a second arm part (2), the end (4) of which fits between the two lugs or flanges (3) of the yokes and is connected to these lugs pivotally about an axis extending through the two lugs **characterized** in that said end (4) of the second arm part, on sides facing the respective lugs, is provided with bearing seats (5) in which shaft sleeves (6) are journalled, that the shaft sleeves (6) are rotatably fixed to said end (4) by means of a pull rod (8) extending through said end (4) and said shaft sleeves (6), that the shaft sleeves (6) fit into through-holes in the respective lug (3) and extend through said lug (3), that the shaft sleeves (6) are fixed by means of nuts (10) screwed onto the accessible parts of said shaft sleeves (6) such that the nuts (10) are tightened against the outer sides of the lugs (3), and that by loosening the nut (10) on one side and tightening the corresponding nut (10) on the other side of the elbow joint, the second arm part (2) can be laterally moved in relation to the first arm part (1)

2. Device according to Claim 1, **characterized** in that the play of the shaft sleeves (6) in relation to their bearing seats (5) is adjusted by tightening of nuts (9) screwed onto the through-going pull rod (8).

3. Device according to Claim 1 or 2, **characterized** in that the hole in the shaft sleeves (6) for the pull rod (8) is provided with an internal thread for the connection of a withdrawing tool.

## Revendications

1. Dispositif destiné à accoupler de façon articulée deux parties de bras, de préférence d'un bras de robot, comprenant une première partie de bras (1) dont l'extrémité d'accouplement se présente sous la forme d'une fourche présentant deux pattes ou brides (3) espacées, a l'emplacement du joint, et une seconde partie de bras (2) dont l'extrémité (4) s'adapte entre les deux pattes ou brides (3) de la fourche, et est accouplée à ces pattes de façon à pouvoir pivoter autour d'un axe qui traverse les deux pattes, **caractérisé** en ce que l'extrémité (4) de la seconde partie de bras comporte, sur les faces situées en regard des pattes respectives, des sièges de paliers (5) dans lesquels des douilles d'axe (6) sont montées de façon tournante, en ce que les douilles d'axe (6) sont fixées de façon tournante à l'extrémité précitée (4) au moyen d'une tige de traction (8) qui traverse cette extrémité (4) et les douilles d'axe (6), en ce que les douilles d'axe (6) sont ajustées dans des trous traversants qui sont formés dans la patte respective (3) et elles traversent cette patte (3), en ce que les douilles d'axe (6) sont fixées au moyen d'écrous (10) vissés sur les parties accessibles de ces douilles d'axe (6), de façon que les écrous (10) soient serrés contre les parties extérieures des pattes (3), et en ce qu'en desserrant l'écrou (10) situé d'un côté, et en serrant l'écrou (10) correspondant de l'autre côté du joint de coude, on peut déplacer latéralement la seconde partie de bras (2) par rapport à la première partie de bras (1).

2. Dispositif selon la revendication 1, **caractérisé** en ce qu'on règle le jeu des douilles d'axe (6) par rapport à leurs sièges de paliers (5) en serrant des écrous (9) qui sont vissés sur la tige de traction traversante (8).

3. Dispositif selon la revendication 1 ou 2, **caractérisé** en que le trou dans les douilles d'axe (6) pour la tige de traction (8) comporte des filets internes pour la fixation d'un outil d'extraction.

## Patentansprüche

1. Vorrichtung zur gelenkigen Verbindung von zwei Armteilen, vorzugsweise von Armteilen eines Roboterarms, mit einem ersten Armteil (1), dessen Verbindungsende als Joch mit (2) zwei einen Zwischenraum zwischen sich bildenden Ansätzen oder Flanschen (3) an der Verbindungstelle ausgebildet ist, und mit einem zweiten Armteil (2), dessen Ende (4) zwischen die beiden Ansätze oder Flansche (3) des Joches paßt und mit diesen Ansätzen drehbar um eine Achse durch die beiden Ansätze verbunden ist, **dadurch gekennzeichnet,** daß das genannte Ende (4) des zweiten Armteils an den den entsprechenden Ansätzen gegenüberliegenden Seiten mit Lagersitzen (5) versehen ist, in welchen Wellenhülsen gelagert sind, daß die Wellenhülsen (6) mittels einer Zugstange (8), die sich durch das genannte Ende (4) und die genannten Wellenhülsen (6) erstreckt, drehbar an dem genannten Ende (4) befestigt sind, daß die Wellenhülsen (6) in durchgehende Löcher in dem betreffenden Ansatz (3) passen und sich durch den genannten Ansatz (3) erstrekken, daß die Wellenhülsen (6) mittels Muttern (10), die auf die zugänglichen Teile der Wellenhülsen (6) aufgeschraubt sind, derart befestigt sind, daß die Muttern (10) gegen die äußeren Seiten der Ansätze (3) festgedreht werden, und daß beim Lösen der Mutter (10) auf einer Seite und Festdrehen der entsprechenden Mutter (10) auf der anderen Seite des Ellenbogengelenks der zweite Armteil (2) in seitlicher Richtung im Verhältnis zum ersten Armteil (1) bewegt werden kann.

2.   Vorrichtung nach Anspruch 1, **dadurch gekennzeichnet,** daß das Spiel zwischen den Wellenhülsen (6) und den Lagersitzen (5) durch das Anziehen von Muttern (9) auf der durchgehenden Zugstange (8) eingestellt werden kann.

3.   Verfahren nach einem der Ansprüche 1 oder 2, **dadurch gekennzeichnet,** daß das Loch in den Wellenhülsen (6) für die Zugstange (8) mit Innengewinde versehen ist zum Anschluß eines Werkzeuges zum Herausziehen.